# FASCICULE DE BREVET EUROPEEN

(11) **EP 4 118 366 B1**
(45) Date de publication et mention de la délivrance du brevet: **29.05.2024**
(21) Numéro de dépôt: 21710549.3
(22) Date de dépôt: 22.02.2021
(51) Int. Cl.: F16J 15/34, F16J 15/447, B62D 55/088

(54) **DISPOSITIF D'ÉTANCHÉITÉ AMÉLIORÉ POUR CARTER**
VERBESSERTE DICHTUNGSVORRICHTUNG FÜR EIN GEHÄUSE
IMPROVED SEALING DEVICE FOR A CASING

(30) Priorité: 09.03.2020 FR 2002323
(43) Date de publication de la demande: 18.01.2023
(73) Titulaire: Poclain Hydraulics Industrie, 60410 Verberie (FR)
(72) Inventeur: GRILLON, Gilles, 60410 VERBERIE (FR); ENGRAND, Julien, 60410 VERBERIE (FR)
(74) Mandataire: Cabinet Beau de Loménie
(86) Numéro de dépôt international: PCT/FR2021/050305
(87) Numéro de publication internationale: WO 2021/181022

(56) Documents cités:
- EP-A1- 0 015 739
- US-A1- 2009 085 303

## Description

### Domaine Technique

Le présent exposé concerne un dispositif d'étanchéité pour un carter, de machine tournante notamment en vue d'une application dans un environnement complexe.

### Technique antérieure

L'emploi de machines tournantes dans des environnements que l'on qualifie d'extrêmes pose des problématiques importantes en termes d'étanchéité. En effet, on considère ici des machines hydrauliques susceptibles d'être utilisées dans des environnements pollués, exposés à des produits chimiques ou à des projections de matière, de débris, de boue, de neige, de particules.

Différentes structures d'étanchéité ont été proposées afin d'assurer une bonne étanchéité entre le volume interne de la machine tournante et le milieu externe. Toutefois, les solutions connues demeurent problématiques en termes de fiabilité, notamment sur la durée.

Les machines hydrauliques comportent un segment fixe et un segment tournant, et un système de joint pour assurer l'étanchéité à l'huile hydraulique du boitier. La durée de vie de la machine dépend de la durée de vie du joint. Les joints peuvent être en caoutchouc ou métalliques. La durée de vie de la machine est améliorée si on protège le joint des salissures. En particulier, les joints métalliques étanches à l'huile sont robustes et donnent une bonne durée de vie, à condition d'être protégés de la contamination par des particules abrasives et de la corrosion. Les particules, par exemple le sable et la boue sur les machines de chantier, entrainent une abrasion nuisible à la durée de vie des joints, et en particulier une abrasion et une corrosion des joints métalliques.

Il est connu de cacher les joints au fond d'un renfoncement. Cependant, celui-ci peut se remplir de particules fines qui peuvent atteindre le joint, et qui vont tourner entre les deux parties tournantes très longtemps sans sortir. De plus pendant la rotation, des particules peuvent être forcées à rentrer dans le renfoncement de manière continue, et parfois poussées sous pression. Le document US2009/085303 présente un exemple de structure connue selon le préambule de la revendication 1.

Le présent exposé vise ainsi à répondre au moins partiellement à ces problématiques.

### Exposé de l'invention

A cet effet, le présent exposé concerne un carter pour machine tournante comprenant un premier segment de carter fixe, et un second segment de carter mobile en rotation par rapport au premier segment selon un axe de rotation, le premier segment de carter et le second segment de carter définissant un volume interne et étant au contact selon une interface, l'interface entre le premier segment de carter et le second segment de carter étant munie d'un élément d'étanchéité, ledit élément d'étanchéité étant positionné dans un logement relié au volume interne du carter d'une part, et au milieu ambiant d'autre part, la liaison entre le logement et le milieu ambiant étant réalisée via un conduit, caractérisé en ce que le premier segment de carter ou le second segment de carter comprend un rabot positionné à une extrémité externe du conduit.

Selon un exemple, l'élément d'étanchéité est un joint d'étanchéité axial.

Selon un exemple, ledit joint d'étanchéité axial comprend un premier anneau métallique, un second anneau métallique, un premier anneau en élastomère et un second anneau en élastomère, le premier anneau métallique et le second anneau métalliques étant montés en appui l'un contre l'autre selon une direction axiale définie par l'axe de rotation, le premier anneau en élastomère étant interposé entre le premier anneau métallique et une paroi du premier segment de carter, et le second anneau en élastomère étant interposé entre le second anneau métallique et une paroi du second segment de carter.

Selon un exemple, le rabot est formé sur le premier segment de carter.

Selon un exemple, le rabot est formé par une paroi du premier segment de carter, inclinée par rapport à l'axe de rotation.

Selon un exemple, le conduit reliant le logement au milieu ambiant comprend une première portion, une deuxième portion et une troisième portion, s'étendant successivement selon une direction radiale par rapport à l'axe de rotation depuis le logement vers le milieu ambiant, la première portion, la deuxième portion et la troisième portion s'étendant chacune radialement par rapport à l'axe de rotation, et étant formées telles que deux portions successives ne sont pas alignées radialement par rapport à l'axe de rotation.

La première portion, la deuxième portion et la troisième portion du conduit ont alors typiquement des sections S1, S2 et S3 respectivement, telles que S1 > S2 > S3.

Le conduit comprend des nervures formées dans le premier segment de carter et dans le second segment de carter de manière à former des chicanes dans ledit conduit, et dans lequel le premier segment de carter et/ou le second segment de carter présentent des perçages formés dans lesdites nervures, de manière à définir des passages entre le logement et le milieu ambiant.

Le premier segment de carter et le second segment de carter présentent des perçages formés dans lesdites nervures, formant respectivement des ouïes externes et des ouïes internes, de manière à définir des passages entre le logement et le milieu ambiant lorsque lesdites ouïes externes et ouïes internes sont alignées.

Selon un exemple, le rabot est configuré de manière à, lors de la rotation de la machine hydraulique, balayer une portion de cylindre située radialement autour d'ouïes externes du carter.

Selon un exemple, les ouïes externes et les ouïes internes présentent une section cylindrique de révolution, s'étendant radialement par rapport à l'axe de rotation.

Selon un exemple, ledit carter comprend deux ensembles d'ouïes externes, disposés de part et d'autre du rabot.

Le présent exposé concerne également un véhicule à chenilles comprenant une machine hydraulique munie d'un carter tel que défini précédemment pour l'entrainement d'une chenille, dans lequel le rabot est placé de manière symétrique par rapport à une zone de compaction de la boue de la machine hydraulique.

Selon un exemple, tout ou partie des ouïes externes sont réalisées de manière à être orientées vers le bas du carter par rapport à la direction de la gravité.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 est une vue d'ensemble d'un carter de machine tournante.
[Fig. 2] La figure 2 est une vue en coupe d'un élément d'étanchéité selon un aspect de la présente invention.
[Fig. 3] La figure 3 est une autre vue en coupe d'un élément d'étanchéité selon un aspect de la présente invention.
[Fig. 4] La figure 4 est une autre vue en coupe d'un élément d'étanchéité selon un aspect de la présente invention.
[Fig. 5] La figure 5 est une vue en coupe axiale d'un carter selon un aspect de l'invention.

Sur l'ensemble des figures, les éléments en commun sont repérés par des références numériques identiques.

### Description des modes de réalisation

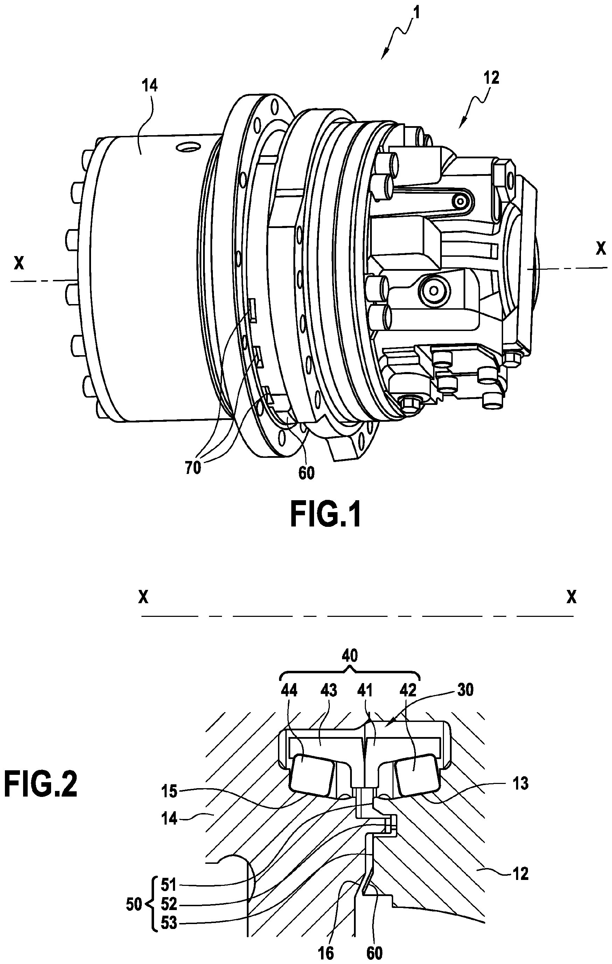

On décrit ci-après un exemple de réalisation de l'invention en référence aux figures 1 et 2.

On représente sur la figure 1 une vue d'ensemble d'un carter, ou boîtier 10 de machine tournante. Le carter comprend un premier segment 12 fixe et un second segment 14mobile, mobile en rotation par rapport au premier segment 12 fixe selon un axe de rotation X-X. Le carter 1 définit un volume interne. Dans la description qui suit, les désignations « radiale » et « axiale » sont définies par rapport à l'axe de rotation X-X sauf mention contraire.

Le carter 10 est par exemple un carter pour une machine hydraulique, par exemple une pompe hydraulique ou un moteur hydraulique, pouvant être une machine hydraulique à pistons radiaux ou une machine hydraulique à pistons axiaux. Le carter 10 est typiquement monté dans un véhicule, un engin ou une machine, par exemple pour assurer une transmission hydraulique principale ou d'assistance d'organes de déplacement, roues ou chenilles, ou par exemple pour assurer l'actionnement d'une charge, d'un bras, d'une tourelle, d'un attelage.

On définit une interface entre le premier segment 12 et le second segment 14, qui correspond aux surfaces de contact entre le premier segment 12 et le second segment 14 du carter 1. On comprend qu'afin d'isoler le volume interne du carter 1 par rapport au milieu ambiant, il est nécessaire d'assurer une étanchéité au niveau de cette interface entre le premier segment 12 et le second segment 14.

La figure 2 présente une vue en coupe d'un exemple de structure d'étanchéité selon un aspect de la présente invention.

On représente sur cette figure un logement 30 formé à l'interface entre le premier segment 12 et le second segment 14 du carter 1. Un élément d'étanchéité 40 est disposé dans le logement 30. Dans l'exemple représenté, l'élément d'étanchéité 40 est un joint axial, communément désigné par l'appellation joint à glace, souvent désigné par l'appellation commerciale duo-cône, ou l'appellation en langue anglaise « floating seal ». L'élément d'étanchéité 40 peut par exemple être un joint à glace métallique, ou une bague à lèvres.

L'élément d'étanchéité 40 comprend ici un premier anneau métallique 41 et un second anneau métallique 43, réalisés en matériau métallique, et qui sont typiquement symétriques par rapport à un plan s'étendant radialement par rapport à l'axe de rotation X-X. L'élément d'étanchéité comprend également un premier anneau en élastomère 42 et un second anneau en élastomère 44, réalisés en matériau élastomère.

Le premier anneau métallique 41 et le second anneau métallique 43 sont en appui l'un contre l'autre selon la direction axiale définie par l'axe de rotation X-X.

Le premier anneau en élastomère 42 est monté en appui contre le premier anneau métallique 41 d'une part, et contre une cloison 13 du premier segment 12 du carter 1.

Le second anneau en élastomère 44 est monté en appui contre le second anneau métallique 43 d'une part, et contre une cloison 15 du second segment 14 du carter 1.

Le premier anneau en élastomère 42 et le second anneau en élastomère 44 sont typiquement positionnés radialement à l'extérieur par rapport au premier anneau en élastomère 42 et au second anneau en élastomère 44. Le premier anneau en élastomère 42 et le second anneau en élastomère 44 viennent comprimer le premier anneau en élastomère 42 et le second anneau en élastomère 44 contre les cloisons 13 et 15 respectivement du premier segment 12 et du second segment 14, et ainsi assurer une liaison étanche.

Le premier anneau métallique 41, le second anneau métallique 43 ainsi que les cloisons 13 et 15 respectivement du premier segment 12 et du second segment 14 sont typiquement formés de manière à ce que le premier anneau en élastomère 42 et le second anneau en élastomère 44 tendent à déplacer le premier anneau métallique 41 et le second anneau métallique 43 l'un contre l'autre selon la direction axiale définie par l'axe de rotation X-X.

Le logement 30 est relié au milieu ambiant via un conduit 50 s'étendant typiquement radialement autour du logement 30.

Le conduit 50 tel que présenté comprend trois portions radiales successives ; une première portion 51, une deuxième portion 52 et une troisième portion 53, s'étendant successivement entre le logement 30 et le milieu ambiant. Ces portions radiales sont typiquement reliées par des portions axiales.

La première portion 51, la deuxième portion 52 et la troisième portion 53 sont formées de manière à ce que deux portions successives ne soient pas alignées radialement. Dans l'exemple illustré, la première portion 51 et la troisième portion 53 sont alignées radialement, tandis que la deuxième portion 52 est décalée par rapport à la première portion 51 et à la troisième portion 53, de manière à former un épaulement dans le conduit 50.

Le conduit 50 forme une chicane de protection pour éviter que les particules n'arrivent en contact de l'élément d'étanchéité 40. Cependant des particules plus fines que la largeur du conduit 50 pourraient y pénétrer. Ce peut être du sable, de la terre, ou de la poussière très fine, ou de la boue qui peut être liquide lors de son introduction, mais qui peut remplir le conduit 50 et sécher. Le conduit 50 formant chicane a également pour but de protéger l'élément d'étanchéité 40 des aspersions directes de fluides, telles que des jets d'eau. Entre la première portion 51 et la troisième portion 53, le conduit 50 présente typiquement une épaisseur de l'ordre de 1mm, l'épaisseur étant mesurée selon la direction radiale pour une portion axiale du conduit, et selon la direction axiale pour une portion radiale du conduit.

Par ailleurs, la première portion 51, la deuxième portion 52 et la troisième portion 53 présentent typiquement des sections S1, S2 et S3 respectivement. Ces sections sont typiquement elles que S1 > S2 > S3, ce qui permet une évacuation de particules présentes dans le logement 30 vers le milieu ambiant, mais réduit les infiltrations de particules depuis le milieu ambiant vers le logement 30.

La deuxième portion 52 et la troisième portion 53 sont réalisées par des nervures formant des murets ou protrusions suivant la direction axiale qui s'interpénètrent. Ces murets ou protrusions présentent des évidements de manière à former des ouïes 70 que l'on décrira par la suite.

L'extrémité externe du conduit 50 est munie d'un rabot 60. Par extrémité externe du conduit 50, on désigne une extrémité du conduit 50 débouchant dans le milieu ambiant, par opposition à son extrémité interne qui débouche dans le logement 30. L'extrémité externe est typiquement dans le prolongement de la troisième portion 53.

Le carter 1 tel que proposé présente ainsi un logement 30 pour élément d'étanchéité 40, ce logement étant relié au milieu ambiant par un conduit 50 présentant successivement une chicane puis un rabot 60.

Le rabot 60 est par exemple formé par un plan incliné par rapport à la direction radiale.

Le rabot 60 est typiquement formé dans le premier segment 12 du carter 1, c'est à dire dans le segment fixe du carter 1. Une surface 16 présentant une inclinaison similaire ou identique est alors typiquement formée dans l'autre segment de carter, ici dans le second segment 14, en regard du rabot 60.

Le rabot 60 et la surface 16 définissent un passage ayant une section S4, typiquement telle que S4 < S3. En fonctionnement, le rabot 60 et la surface 16 présentent un jeu qui est typiquement constant, par exemple égal à 1mm.

Le mouvement relatif de la surface 16 devant le rabot 60 lors de la rotation relative des segments 12 et 14 du carter 1 va décoller la boue qui s'est fixées sur le segment en rotation et les évacuer dans une direction opposée à l'entrée dans le conduit 50.

Le rabot 60 forme ainsi un racleur, qui permet d'éliminer les impuretés venant se déposer ou s'accumuler au niveau de l'entrée du conduit 50. Le rabot 60 permet notamment d'éliminer les dépôts de matière ayant séché par exemple lorsque l'engin ou l'appareil dans lequel le carter 1 est implanté est à l'arrêt, typiquement de la boue ou du sable.

Le rabot 60 est typiquement formé dans un secteur angulaire compris entre 1 ° et 30°, ou par exemple entre 5 et 20° autour de l'axe de rotation X-X.

Le rabot 60 est typiquement formé dans un secteur angulaire opposé à un secteur angulaire d'entrainement de chenille dans le cas d'une application pour un véhicule équipé de chenilles. Le rabot 60 est typiquement formé de manière à être incliné d'un angle compris entre 30 et 60°, ou plus précisément entre 40 et 50°, ou encore égal à 45°par rapport à une direction verticale lorsque le carter est monté sur un engin ou un véhicule.

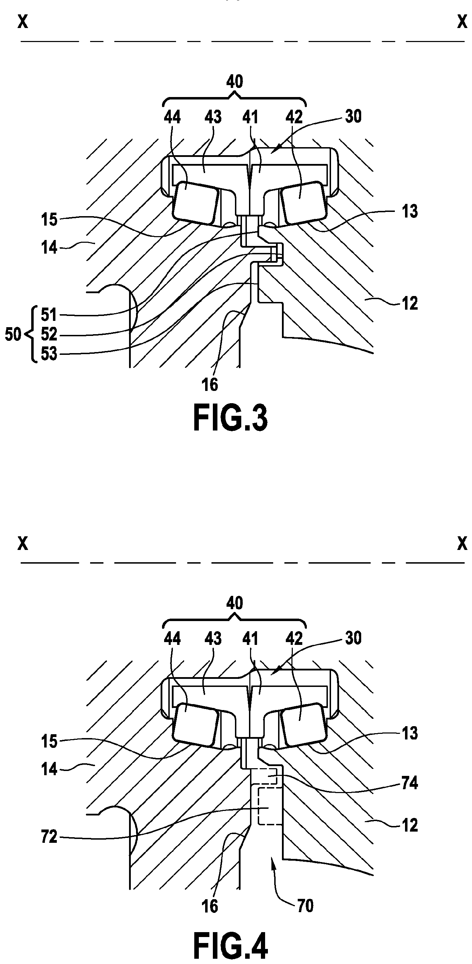

La figure 3 représente un exemple de vue en coupe selon une section ne comprenant pas le rabot 60. On retrouve ici le conduit 50 définissant une chicane telle que définie précédemment, la partie du premier segment 12 du carter 1 comprenant le rabot 60 étant ici tronquée.

Le rabot 60 est typiquement issu de fonderie avec le segment de carter dans lequel il est formé.

Le rabot 60 est globalement typiquement orienté vers le bas de la machine hydraulique, vis-à-vis de la direction de la pesanteur terrestre, ce qui éloigne les particules de l'entrée du conduit 50. Le rabot 60 vient racler la matière déposée sur une portion de cylindre sur un rayon supérieur à celui de murets extérieur portant les ouïes 70.

Pour les machines à chenille, le rabot 60 est typiquement orienté vers le bas et éloigné, typiquement à l'opposé, de la zone ou la chenille rejoint un barbotin porté par la machine hydraulique comprenant le carter 1, de façon à ce que le mouvement de la chenille ne force pas de la boue dans les alentours du rabot 60. Le rabot 60 est typiquement orienté vers le bas et du côté de la chenille qui quitte le barbotin pour bénéficier du mouvement du brin de chenille qui tend à éloigner la boue de la fenêtre du rabot 60.

Le rabot 60 est typiquement symétrique et placé de part et d'autre de l'axe de symétrie passant par la zone de compaction de la boue pour une chenille, de manière à pouvoir fonctionner aussi bien à droite et à gauche. Le rabot 60 peut être plus ou moins long, ou en deux parties séparées, la surface assurant le raclage étant symétrique par rapport au dit axe de symétrie de la zone de compression de la boue.

Le rabot 60 est typiquement réalisé dans une zone du premier segment 12 de carter présentant une surépaisseur sur un secteur angulaire compris entre 5 et 15°, par exemple égal à 10°. Le rabot 60 est typiquement réalisé par usinage circulaire dans une surépaisseur du premier segment 12 de carter.

Le rabot 60 est typiquement dimensionné de manière à ne pas venir au contact de vis, boulons ou écrous de fixation associés au carter 1.

Le carter 1 peut comporter deux rabots 60, de manière à former une machine droite et une machine gauche, permettant d'équiper les deux cotés d'un engin ou véhicule avec une machine hydraulique similaire.

Comme indiqué précédemment, les ouïes 70 sont des perçages formés dans le carter 1, dans les murets ou protrusions du premier segment 12 et du second segment 14 du carter 1, et définissant des passages entre le milieu ambiant et le logement 30 ayant une section augmentée par rapport au conduit 50. Les ouïes 70 sont notamment dépourvues de sections formant des chicanes ou des obstacles.

La figure 4 illustre un exemple de réalisation des ouïes 70. On voit sur cette figure que des portions du premier segment 12 et du second segment 14 du carter 1 définissant le conduit 50 ont été tronquées. Dans l'exemple illustré sur les figures, les portions tronquées dans le premier segment 12 définissent des ouïes externes 72, et les portions tronquées dans le second segment 14 définissent des ouïes internes 74. Les portions tronquées sont indiquées en pointillés sur la figure 4. Les portions tronquées formant les ouïes externes 72 et les ouïes internes 74 peuvent être formées par voie de fonderie, ou par usinage.

Lorsque les ouïes internes 74 et les ouïes externes 72 sont alignées, elles définissent un conduit ayant une section généralement rectangulaire lorsque les portions tronquées du premier segment 12 et du second segment 14 du carter 1 sont alignées, comme visible sur la figure 4.

Lorsque les ouïes internes 74 et les ouïes externes 72 ne sont pas alignées, on retrouve une forme de chicane dans le conduit 50, et une section minimale égale à S2 ou à S3, ce qui permet d'éviter l'entrée de pollution par le conduit 50.

Tout ou partie des ouïes externes 72 formées dans le premier segment 12 fixe du carter 1 sont typiquement configurées de manière à être orientées vers le bas lorsque le carter est monté dans un véhicule ou un engin, typiquement dans un secteur angulaire de 45° centré selon la directbn de la gravité, ou selon une direction définie par une semelle de fixation du carter 1 sur un véhicule.

A titre d'exemple, le premier segment 12 du carter 1 présente des portions tronquées définissant des ouïes externes 72 réparties de part et d'autre du rabot 60, par exemple trois portions tronquées de part et d'autre du rabot 60. Le second segment 14 du carter 1 peut par exemple des portions tronquées définissant des ouïes internes 74 réparties régulièrement autour de l'axe de rotation X-X.

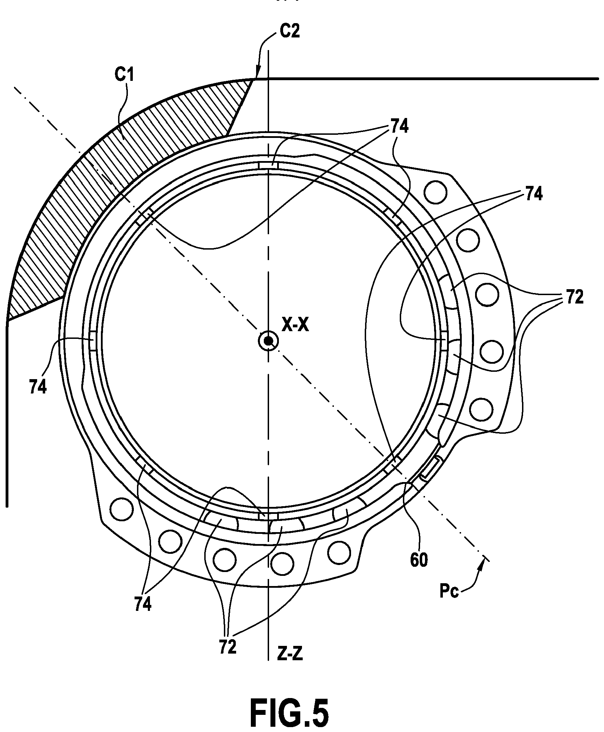

La figure 5 présente une vue en coupe d'un carter 1 selon un plan perpendiculaire à l'axe de rotation X-X, illustrant un exemple de configuration.

Sur cette figure, on représente schématiquement un secteur d'entrainement C1 d'une chenille C2 de véhicule. Ce secteur d'entrainement C1 est centré sur un plan Pc incliné à 45° par rapport à la direction verticale ici schématisée par l'axe Z-Z, correspondant à la direction définie par la gravité, ou par la direction définie par une semelle de fixation du carter 1 sur un véhicule. Le secteur d'entrainement C1 correspond typiquement à une zone d'accumulation de boue dans le cas d'un véhicule à chenille.

Comme on le voit sur la figure, le rabot 60 est diamétralement opposé au secteur d'entrainement C1, et est typiquement centré sur le plan Pc.

On voit sur cette figure que le carter 1 comprend deux ensembles de trois ouïes externes 72 réparties de part et d'autre du rabot 60, et 8 ouïes internes 74 réparties régulièrement autour de l'axe de rotation X-X. Comme on le voit sur la figure 5, les ouïes externes 72 sont ainsi espacées du secteur d'entrainement C1, ce qui permet d'éviter que la boue susceptible de s'accumuler dans le secteur d'entrainement C1 atteigne les externes 72.

Les ouïes internes 74 et les ouïes externes 72 ont typiquement une section cylindrique de révolution selon une direction radiale par rapport à l'axe de rotation X-X, et débouchent radialement vers l'extérieur. Dans l'exemple illustré sur la figure 4, les ouïes externes 72 ont des parois formant un arc de cercle ou un segment d'ellipse ou de parabole. Les ouïes 70 ont généralement une forme de rainure radiale, présentant une dépouille orientée vers le milieu ambiant pour faciliter l'évacuation de la matière.

Les ouïes 70 ont pour fonction d'assurer une évacuation d'éventuels résidus ou de particules qui auraient tout de même pénétré dans le logement 30.Chaque muret ou protrusion comprend des ouvertures. Lors de la rotation, lorsque les ouvertures de la deuxième portion 52 sont en face des ouvertures de la troisième portion 53, les particules présentent dans le conduit 50 peuvent s'évacuer.

Si de la boue séchée ou des particules fines sont entrées dans le conduit 50, elles vont se briser lors d'une remise en route de la machine hydraulique et s'écouler vers le bas en passant par les ouïes 70, ce qui va vider le conduit 50. En outre cela protège le conduit 50 des écoulements d'eau.

Pour permettre l'utilisation du carter 1 aussi bien à droite et à gauche d'une machine, on place des ouïes symétriquement par rapport à l'axe de symétrie des brides de fixation de la portion fixe 12 du carter 1 sur le châssis d'une machine.

Le carter tel que présenté est notamment destiné à comprendre une machine hydraulique destinée à réaliser des entrainements en rotation sur des machines, engins ou véhicules exposés à des environnements agressifs en terme de contaminants, de particules et d'usure. Une machine hydraulique comprenant un carter tel que proposé peut être particulièrement adaptée à des entrainements de translations de machines de chantier, agricoles, d'engins ou de véhicules, et plus particulièrement adaptée à l'entrainement de transmissions à chenilles.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Carter (1) pour machine tournante comprenant un premier segment (12) de carter fixe, et un second segment (14) de carter mobile en rotation par rapport au premier segment (12) selon un axe de rotation (X-X), le premier segment (12) de carter et le second segment (14) de carter définissant un volume interne et étant au contact selon une interface, l'interface entre le premier segment (12) de carter et le second segment (14) de carter étant munie d'un élément d'étanchéité (40), ledit élément d'étanchéité (40) étant positionné dans un logement (30) relié au volume interne du carter d'une part, et au milieu ambiant d'autre part, la liaison entre le logement (30) et le milieu ambiant étant réalisée via un conduit (50),
dans lequel le premier segment (12) de carter ou le second segment (14) de carter comprend un rabot (60) positionné à une extrémité externe du conduit (50),
dans lequel le conduit (50) comprend des nervures formées dans le premier segment (12) de carter et dans le second segment (14) de carter de manière à former des chicanes dans ledit conduit (50),
**caractérisé en ce que** le premier segment (12) de carter et/ou le second segment (14) de carter présentent des perçages formés dans lesdites nervures, de manière à définir des passages entre le logement (30) et le milieu ambiant, et le premier segment (12) de carter et le second segment (14) de carter présentent des perçages formés dans lesdites nervures, formant respectivement des ouïes externes (72) et des ouïes internes (74), de manière à définir des passages entre le logement (30) et le milieu ambiant lorsque lesdites ouïes externes (72) et ouïes internes (74) sont alignées.

2. Carter (1) selon la revendication 1, dans lequel l'élément d'étanchéité (40) est un joint d'étanchéité axial.

3. Carter (1) selon la revendication 2, dans lequel ledit joint d'étanchéité axial comprend un premier anneau métallique (41), un second anneau métallique (43), un premier anneau en élastomère (42) et un second anneau en élastomère (44), le premier anneau métallique (41) et le second anneau métalliques (43) étant montés en appui l'un contre l'autre selon une direction axiale définie par l'axe de rotation (X-X), le premier anneau en élastomère (42) étant interposé entre le premier anneau métallique (41) et une paroi (13) du premier segment (12) de carter, et le second anneau en élastomère (44) étant interposé entre le second anneau métallique (43) et une paroi (15) du second segment (14) de carter.

4. Carter (1) selon l'une des revendications 1 à 3, dans lequel le rabot (60) est formé sur le premier segment (12) de carter.

5. Carter (1) selon la revendication 4, dans lequel le rabot (60) est formé par une paroi du premier segment (12) de carter, inclinée par rapport à l'axe de rotation (X-X).

6. Carter (1) selon l'une des revendications 1 à 5, dans lequel le conduit (50) reliant le logement (30) au milieu ambiant comprend une première portion (51), une deuxième portion (52) et une troisième portion (53), s'étendant successivement selon une direction radiale par rapport à l'axe de rotation (X-X) depuis le logement (30) vers le milieu ambiant, la première portion (51), la deuxième portion (52) et la troisième portion (53) s'étendant chacune radialement par rapport à l'axe de rotation (X-X), et étant formées telles que deux portions successives ne sont pas alignées radialement par rapport à l'axe de rotation (X-X).

7. Carter (1) selon la revendication 6, dans lequel la première portion (51), la deuxième portion (52) et la troisième portion (53) du conduit (50) ont des sections S1, S2 et S3 respectivement, telles que S1 > S2 > S3.

8. Carter (1) selon l'une des revendications 1 à 7, dans lequel le rabot (60) est configuré de manière à, lors de la rotation du second segment (14) de carter par rapport au premier segment (12) de carter, balayer une portion de cylindre située radialement autour des ouïes externes (72) du carter (1).

9. Carter (1) selon l'une des revendications 1 à 8, dans lequel les ouïes externes (72) et les ouïes internes (74) présentent une section cylindrique de révolution, s'étendant radialement par rapport à l'axe de rotation (X-X).

10. Carter (1) selon l'une des revendications 1 à 9, comprenant deux ensembles d'ouïes externes (72), disposés de part et d'autre du rabot (60).

11. Véhicule à chenilles comprenant une machine hydraulique munie d'un carter (1) selon l'une des revendications précédentes pour l'entrainement d'une chenille, dans lequel le rabot (60) est placé de manière symétrique par rapport à une zone de compaction de la boue de la machine hydraulique.

12. Véhicule selon la revendication 11, dans lequel la machine hydraulique est munie d'un carter selon l'une des revendications 1 à 10, et dans lequel tout ou partie des ouïes externes (72) sont réalisées de manière à être orientées vers le bas du carter (1) par rapport à la direction de la gravité.

## Patentansprüche

1. Gehäuse (1) für eine drehende Maschine, umfassend ein erstes festes Gehäusesegment (12) und ein zweites bewegliches Gehäusesegment (14) in Drehung mit Bezug auf das erste Segment (12) gemäß einer Drehachse (X-X), wobei das erste Gehäusesegment (12) und das zweite Gehäusesegment (14) ein Innenvolumen definieren und in Kontakt gemäß einer Schnittstelle sind, wobei die Schnittstelle zwischen dem ersten Gehäusesegment (12) und dem zweiten Gehäusesegment (14) mit einem Dichtungselement (40) ausgestattet ist, wobei das Dichtungselement (40) in einer Aufnahme (30) positioniert ist, die mit dem Innenvolumen des Gehäuses einerseits und mit der Umgebung andererseits verbunden ist, wobei die Verbindung zwischen der Aufnahme (30) und der Umgebung über einen Kanal (50) durchgeführt wird,
wobei das erste Gehäusesegment (12) oder das zweite Gehäusesegment (14) einen Hobel (60) umfasst, der an einem Äußeren Ende des Kanals (50) positioniert ist,
wobei der Kanal (50) Rippen umfasst, die im ersten Gehäusesegment (12) und im zweiten Gehäusesegment (14) gebildet sind, um Hindernisse in dem Kanal (50) zu bilden,
**dadurch gekennzeichnet, dass** das erste Gehäusesegment (12) und/oder das zweite Gehäusesegment (14) Bohrungen aufweisen, die in den Rippen gebildet sind, um Durchgänge zwischen der Aufnahme (30) und der Umgebung zu definieren, und das erste Gehäusesegment (12) und das zweite Gehäusesegment (14) Bohrungen aufweisen, die in den Rippen gebildet sind, die jeweils äußere Schlitze (72) und innere Schlitze (74) bilden, um Durchgänge zwischen der Aufnahme (30) und der Umgebung zu definieren, wenn die äußeren Schlitze (72) und die inneren Schlitze (74) ausgefluchtet sind.

2. Gehäuse (1) nach Anspruch 1, wobei das Dichtungselement (40) eine axiale Dichtung ist.

3. Gehäuse (1) nach Anspruch 2, wobei die axiale Dichtung einen ersten metallischen Ring (41), einen zweiten metallischen Ring (43), einen ersten Ring aus Elastomer (42) und einen zweiten Ring aus Elastomer (44) umfasst, wobei der erste metallische Ring (41) und der zweite metallische Ring (43) in gegenseitiger Auflage gemäß einer axialen Richtung montiert sind, die von der Drehachse (X-X) definiert wird, wobei der erste Ring aus Elastomer (42) zwischen dem ersten metallischen Ring (41) und einer Wand (13) des ersten Segments (12) des Gehäuses angebracht ist, und wobei der zweite Ring aus Elastomer (44) zwischen dem zweiten metallischen Ring (43) und einer Wand (15) des zweiten Gehäusesegments (14) angebracht ist.

4. Gehäuse (1) nach einem der Ansprüche 1 bis 3, wobei der Hobel (60) auf dem ersten Gehäusesegment (12) gebildet ist.

5. Gehäuse (1) nach Anspruch 4, wobei der Hobel (60) von einer Wand des ersten Gehäusesegments (12) gebildet ist, die mit Bezug auf die Drehachse (X-X) geneigt ist.

6. Gehäuse (1) nach einem der Ansprüche 1 bis 5, wobei der Kanal (50), der die Aufnahme (30) mit der Umgebung verbindet, einen ersten Abschnitt (51), einen zweiten Abschnitt (52) und einen dritten Abschnitt (53) umfasst, die sich aufeinanderfolgend gemäß einer radialen Richtung mit Bezug auf die Drehachse (X-X) von der Aufnahme (30) hin zur Umgebung erstrecken, wobei sich der erste Abschnitt (51), der zweite Abschnitt (52) und der dritte Abschnitt (53) jeweils radial mit Bezug auf die Drehachse (X-X) erstrecken und derart geformt sind, dass zwei aufeinanderfolgende Abschnitte nicht radial mit Bezug auf die Drehachse (X-X) ausgefluchtet sind.

7. Gehäuse (1) nach Anspruch 6, wobei der erste Abschnitt (51), der zweite Abschnitt (52) und der dritte Abschnitt (53) des Kanals (50) jeweils Sektionen S1, S2 und S3 aufweisen, wie z. B. S1 > S2 > 53.

8. Gehäuse (1) nach einem der Ansprüche 1 bis 7, wobei der Hobel (60) derart konfiguriert ist, dass er, bei Drehung des zweiten Gehäusesegments (14) mit Bezug auf das erste Gehäusesegment (12) einen Zylinderabschnitt, der sich radial um äußere Schlitze (72) des Gehäuses (1) befindet, abfegt.

9. Gehäuse (1) nach einem der Ansprüche 1 bis 8, wobei die äußeren Schlitze (72) und die inneren Schlitze (74) eine zylindrische Drehsektion aufweisen, die sich radial mit Bezug auf die Drehachse (X-X) erstreckt.

10. Gehäuse (1) nach einem der Ansprüche 1 bis 9, umfassend zwei Einheiten von inneren Schlitzen (72), die auf beiden Seiten des Hobels (60) angeordnet sind.

11. Kettenfahrzeug, umfassend eine hydraulische Maschine, ausgestattet mit einem Gehäuse (1) nach einem der vorhergehenden Ansprüche, für den Antrieb einer Kette, wobei der Hobel (60) auf symmetrische Weise mit Bezug auf den Bereich der Kontaktierung des Schlamms der hydraulischen Maschine platziert ist.

12. Fahrzeug nach Anspruch 11, wobei die hydraulische Maschine mit einem Gehäuse nach einem der Ansprüche 1 bis 10 ausgestattet ist, und wobei die Gesamtheit oder ein Teil der äußeren Schlitze (72) derart durchgeführt sind, dass sie hin zur unteren Seite des Gehäuses (1) mit Bezug auf die Richtung der Schwerkraft ausgerichtet sind.

## Claims

1. A casing (1) for a rotating machine comprising a first fixed casing segment (12), and a second casing segment (14) movable in rotation with respect to the first segment (12) along an axis of rotation (X-X), the first casing segment (12) and the second casing segment (14) defining an internal volume and being in contact along an interface, the interface between the first casing segment (12) and the second casing segment (14) being provided with a sealing element (40), said sealing element (40) being positioned in a housing (30) connected to the internal volume of the casing on the one hand, and to the surrounding medium on the other hand, the connection between the housing (30) and the surrounding medium being made via a duct (50),
**characterized in that** the first casing segment (12) or the second casing segment (14) comprises a planer (60) positioned at an outer end of the duct (50)
wherein the duct (50) comprises ribs formed in the first casing segment (12) and in the second casing segment (14) so as to form baffles in said duct (50),
**characterized in that** the first casing segment (12) and/or the second casing segment (14) have bores formed in said ribs, so as to define passages between the housing (30) and the surrounding medium
and the first casing segment (12) and the second casing segment (14) have bores formed in the said ribs, forming respectively outer holes (72) and inner holes (74), so as to define passages between the housing (30) and the surrounding medium when said outer holes (72) and inner holes (74) are aligned.

2. The casing (1) according to claim 1, wherein the sealing element (40) is an axial seal.

3. The casing (1) according to claim 2, wherein said axial seal comprises a first metal ring (41), a second metal ring (43), a first elastomeric ring (42) and a second elastomeric ring (44), the first metal ring (41) and the second metal ring (43) being mounted bearing against each other along an axial direction defined by the axis of rotation (X-X), the first elastomeric ring (42) being interposed between the first metal ring (41) and a wall (13) of the first casing segment (12), and the second elastomeric ring (44) being interposed between the second metal ring (43) and a wall (15) of the second casing segment (14).

4. The casing (1) according to any of claims 1 to 3, wherein the planer (60) is formed on the first casing segment (12).

5. The casing (1) according to claim 4, wherein the planer (60) is formed by a wall of the first casing segment (12), inclined with respect to the axis of rotation (X-X).

6. The casing (1) according to any of claims 1 to 5, wherein the duct (50) connecting the housing (30) to the surrounding medium comprises a first portion (51), a second portion (52) and a third portion (53), extending successively along a radial direction with respect to the axis of rotation (X-X) from the housing (30) towards the surrounding medium, the first portion (51), the second portion (52) and the third portion (53) each extending radially with respect to the axis of rotation (X-X), and being formed such that two successive portions are not aligned radially with respect to the axis of rotation (X-X).

7. The casing (1) according to claim 6, wherein the first portion (51), the second portion (52) and the third portion (53) of the duct (50) have sections S1, S2 and S3 respectively, such that S1 > S2 > S3.

8. The casing (1) according to any one of claims 1 to 7, wherein the planer (60) is configured so as to scan, during the rotation of the first casing segment (12) with respect to the second casing segment (14), a cylinder portion located radially around the outer holes (72) of the casing (1).

9. The casing (1) according to any of claims 1 to 8, wherein the outer holes (72) and the inner holes (74) have a cylindrical section of revolution, extending radially with respect to the axis of rotation (X-X).

10. The casing (1) according to any of claims 1 to 9, comprising two sets of outer holes (72), disposed on either side of the planer (60).

11. A tracked vehicle comprising a hydraulic machine provided with a casing (1) according to any of the preceding claims for the driving of a track, wherein the planer (60) is placed symmetrically with respect to a mud compaction area of the hydraulic machine.

12. The vehicle according to claim 1, wherein the hydraulic machine is provided with a casing according to any of claims 1 to 10, and wherein all or part of the outer holes (72) are made so as to be oriented downwardly the casing (1) with respect to the direction of gravity.
